# EUROPEAN PATENT APPLICATION

(11) **EP 4 542 712 A1**
(43) Date of publication of application: **23.04.2025**
(21) Application number: 23853037.2
(22) Date of filing: 10.08.2023
(51) Int. Cl.: H01M 10/0567, H01M 10/052

(54) **NON-AQUEOUS ELECTROLYTE AND LITHIUM SECONDARY BATTERY COMPRISING SAME**

(30) Priority: 12.08.2022 KR 20220101642
(71) Applicant: LG Energy Solution, Ltd., Seoul 07335 (KR)
(72) Inventor: PARK, Sung Guk, Daejeon 34122 (KR); CHO, Yoon Gyo, Daejeon 34122 (KR); LEE, Chul Haeng, Daejeon 34122 (KR); LEE, Jung Hoon, Daejeon 34122 (KR)
(74) Representative: Hoffmann Eitle
(86) International application number: PCT/KR2023/011855
(87) International publication number: WO 2024/035170

(57) **Abstract**

The present invention provides a non-aqueous electrolyte including: a lithium salt; an organic solvent; and an additive, wherein the additive includes a first additive including a compound represented by a specific formula and a second additive including lithium difluorophosphate. The non-aqueous electrolyte according to the present invention may form a stable film on the electrodes, and thus improve the storage characteristics and resistance characteristics at a high temperature of a lithium secondary battery including the non-aqueous electrolyte.

## Description

### TECHNICAL FIELD

### Cross-reference to Related Applications

This application claims the benefit of Korean Patent Application No. 10-2022-0101642, filed on August 12, 2022, the disclosure of which is incorporated herein in its entirety by reference.

### Technical Field

The present invention relates to a non-aqueous electrolyte and a secondary battery including the same.

### BACKGROUND ART

Recently, as application fields of a lithium secondary battery have rapidly expanded to not only the power supply of electronic devices such as electricity, electronics, communications, and computers but also the power storage supply of large-area devices such as automobiles and power storage devices, a demand for a secondary battery having high capacity, high output, and high stability has been increasing.

Particularly, studies on electricity storage devices, such as electric double-layer capacitors and lithium ion batteries, have been extensively conducted as an interest in solving environmental problems and realizing a sustainable circular society emerges. Among these battery technologies, lithium secondary batteries, which are battery systems having the theoretically highest energy density, are in the spotlight.

The lithium secondary battery is largely composed of a positive electrode formed of a transition metal oxide containing lithium, a negative electrode capable of storing lithium, an electrolyte solution that becomes a medium for transferring lithium ions, and a separator, and, among them, a significant amount of research on the electrolyte solution has been conducted while the electrolyte solution is known as a component that greatly affects stability and safety of the battery.

In this regard, in general, a non-aqueous electrolyte including a lithium salt, an organic solvent, and the like is used as an electrolyte solution of a lithium secondary battery, and a carbonate-based organic solvent and the like are used as the organic solvent. In this case, for example, LiPF₆ may be used as the lithium salt, and in the case of PF₆⁻ anion, when the battery is exposed to high temperatures due to being very vulnerable to heat, there is a limitation that a Lewis acid such as HF or PF₅ is generated due to thermal decomposition of the lithium salt. There is a limitation in that the Lewis acid, such as HF or PF₅, causes the decomposition of the organic solvent itself and destroys the solid electrolyte interface layer (SEI layer) formed on the surface of the negative electrode active material, thereby causing an increase in resistance, a decrease in life, and deterioration in storage performance of the lithium secondary battery.

### DISCLOSURE OF THE INVENTION

### TECHNICAL PROBLEM

An aspect of the present invention provides a non-aqueous electrolyte which may reduce a side reaction of an electrolyte by forming a stable film on the electrodes, and achieve excellent storage characteristics and resistance characteristics at a high temperature when applied to a lithium secondary battery.

Another aspect of the present invention provides a lithium secondary battery including the above-described non-aqueous electrolyte.

### TECHNICAL SOLUTION

According to an aspect of the present invention, there is provided a non-aqueous electrolyte including: a lithium salt; an organic solvent; and an additive, wherein the additive include a first additive and a second additive, the first additive includes a compound represented by Formula 1 below, and the second additive includes lithium difluorophosphate.

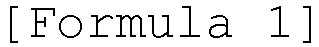

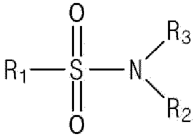

In Formula 1 above, R₁ is an alkoxy group having 1 to 10 carbon atoms substituted with at least one fluorine or an aryloxy group having 6 to 20 carbon atoms substituted with at least one fluorine, and R₂ and R₃ are each independently hydrogen, an alkyl group having 1 to 10 carbon atoms, or an aryl group having 6 to 20 carbon atoms.

In addition, according to another aspect of the present invention, there is provided a lithium secondary battery including: a positive electrode; a negative electrode facing the positive electrode; a separator interposed between the negative electrode and the positive electrode; and the above-described non-aqueous electrolyte.

### ADVANTAGEOUS EFFECTS

The non-aqueous electrolyte of the present invention includes, as additives, a first additive including a sulfonamide-based compound having a specific structural formula and a second additive including lithium difluorophosphate. The non-aqueous electrolyte according to the present invention may reduce a side reaction of an electrolyte by forming a stable film on the electrodes, and achieve excellent storage characteristics and resistance characteristics at a high temperature when applied to a lithium secondary battery.

### MODE FOR CARRYING OUT THE INVENTION

It will be understood that terms or words used in the present specification and claims shall not be construed as being limited to having meanings defined in commonly used dictionaries, but should be interpreted as having meanings and concepts consistent with the technical idea of the present invention based on the principle that an inventor may appropriately define concepts of the terms to best explain the invention.

It will be further understood that the terms "include," "comprise," or "have" in this specification specify the presence of stated features, numbers, steps, elements, or combinations thereof, but do not preclude the presence or addition of one or more other features, numbers, steps, elements, or combinations thereof.

Meanwhile, before describing the present invention, unless otherwise specified in the present invention, the expression "*" denotes the same or different atom or a portion connected (binding site) between ends of a formula.

Also, the expressions "a" and "b" in the description of "a to b carbon atoms" in the specification each denote the number of carbon atoms included in a specific functional group. That is, the functional group may include "a" to "b" carbon atoms. For example, an "alkyl group having 1 to 5 carbon atoms" means an alkyl group containing 1 to 5 carbon atoms, that is, CH₃-, CH₃CH₂-, CH₃CH₂CH₂-, (CH₃)₂CH-, CH₃CH₂CH₂CH₂-, (CH₃)₂CHCH₂-, CH₃CH₂CH₂CH₂CH₂-, (CH₃)₂CHCH₂CH₂-, or the like.

In addition, in the present specification, an alkyl group or an aryl group may all be substituted or unsubstituted. Unless otherwise defined, the term "substituted" means that at least one hydrogen bonded to carbon is substituted with an element other than hydrogen, and for example, it means being substituted with an alkyl group having 1 to 20 carbon atoms, an alkenyl group having 2 to 20 carbon atoms, an alkynyl group having 2 to 20 carbon atoms, an alkoxy group having 1 to 20 carbon atoms, a cycloalkyl group having 3 to 12 carbon atoms, a cycloalkenyl group having 3 to 12 carbon atoms, a cycloalkynyl group having 3 to 12 carbon atoms, a heterocycloalkyl group having 3 to 12 carbon atoms, a heterocycloalkenyl group having 3 to 12 carbon atoms, a heterocycloalkynyl group having 2 to 12 carbon atoms, an aryloxy group having 6 to 12 carbon atoms, a halogen atom, a fluoroalkyl group having 1 to 20 carbon atoms, a nitro group, an aryl group having 6 to 20 carbon atoms, a heteroaryl group having 2 to 20 carbon atoms, a haloaryl group having 6 to 20 carbon atoms, etc.

Hereinafter, the present invention will be described in more detail.

### Non-aqueous Electrolyte

The present invention relates to a non-aqueous electrolyte. More specifically, the non-aqueous electrolyte may be a non-aqueous electrolyte for a lithium secondary battery.

The non-aqueous electrolyte according to an aspect of the present invention includes: a lithium salt; an organic solvent; and an additive, wherein the additive include a first additive and a second additive, the first additive includes a compound represented by Formula 1 below, and the second additive includes lithium difluorophosphate.

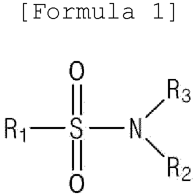

In Formula 1 above, R₁ is an alkoxy group having 1 to 10 carbon atoms substituted with at least one fluorine or an aryloxy group having 6 to 20 carbon atoms substituted with at least one fluorine, and R₂ and R₃ are each independently hydrogen, an alkyl group having 1 to 10 carbon atoms, or an aryl group having 6 to 20 carbon atoms.

The non-aqueous electrolyte of the present invention includes, as additives, a first additive including a sulfonamide-based compound having a specific structural formula and a second additive including lithium difluorophosphate. The non-aqueous electrolyte according to the present invention may reduce a side reaction of an electrolyte by forming a stable film on the electrodes, and achieve excellent storage characteristics and resistance characteristics at a high temperature when applied to a lithium secondary battery.

### (1) Lithium Salt

As the lithium salt used in the present invention, various lithium salts commonly used in a non-aqueous electrolyte for a lithium secondary battery may be used without limitation. For example, the lithium salt may include Li⁺ as a cation, and may include at least one selected from the group consisting of F⁻, Cl⁻, Br⁻, I⁻, NO₃⁻, N(CN)₂⁻, BF₄⁻, ClO₄⁻, AlO₄⁻, AlCl₄⁻, PF₆⁻, SbF₆⁻, AsF₆⁻, B₁₀Cl₁₀⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (FSO₂)₂N⁻, CF₃CF₂(CF₃)₂CO⁻, (CF₃SO₂)₂CH⁻, CH₃SO₃⁻, CF₃(CF₂)₇SO₃⁻, CF₃CO₂⁻, CH₃CO₂⁻, SCN⁻, and (CF₃CF₂SO₂)₂N⁻ as an anion.

Specifically, the lithium salt may include at least one selected from the group consisting of LiCl, LiBr, LiI, LiBF₄, LiClO₄, LiAlO₄, LiAlCl₄, LiPF₆, LiSbF₆, LiAsF₆, LiB₁₀Cl₁₀, LiB(C₂O₄)₂ (LiBOB), LiCF₃SO₃, LiN (SO₂F)₂ (LiFSI), LiCH₃SO₃, LiCF₃CO₂, LiCH₃CO₂, and LiN(SO₂CF₂CF₃)₂ (LiBETI). Specifically, the lithium salt may include at least one selected from the group consisting of LiBF₄, LiClO₄, LiPF₆, LiB(C₂O₄)₂ (LiBOB), LiCF₃SO₃, LiN (SO₂CF₃)₂ (LiTFSI), (LiN (SO₂F)₂ (LiFSI), and LiN (SO₂CF₂CF₃)₂ (LiBETI).

The lithium salt may be included in the non-aqueous electrolyte at a concentration of 0.5 M to 5 M, specifically at a concentration of 0.8 M to 4 M, and more specifically at a concentration of 0.8 M to 2.0 M. When the concentration of the lithium salt satisfies the above range, the lithium ion yield (Li⁺ transference number) and the degree of dissociation of lithium ions may be improved, thereby improving the output characteristics of the battery.

### (2) Organic Solvent

The organic solvent is a non-aqueous solvent commonly used in a lithium secondary battery, and is not particularly limited as long as it may minimize decomposition by oxidation reaction or the like in the process of charging and discharging the secondary battery.

Specifically, the organic solvent includes at least one selected from the group consisting of a cyclic carbonate-based organic solvent, a linear carbonate-based organic solvent, a linear ester-based organic solvent, and a cyclic ester-based organic solvent.

Specifically, the organic solvent may include a cyclic carbonate-based organic solvent, a linear carbonate-based organic solvent, or a mixture thereof.

The cyclic carbonate-based organic solvent is an organic solvent which may well dissociate the lithium salt in the electrolyte due to high permittivity as a highly viscous organic solvent, specifically, may include at least one organic solvent selected from the group consisting of ethylene carbonate (EC), propylene carbonate (PC), 1,2-butylene carbonate, 2,3-butylene carbonate, 1,2-pentylene carbonate, 2,3-pentylene carbonate, and vinylene carbonate, and more specifically, may include ethylene carbonate.

In addition, the linear carbonate-based organic solvent is an organic solvent having low viscosity and low permittivity, specifically, may include at least one selected from the group consisting of dimethyl carbonate (DMC), diethyl carbonate (DEC), dipropyl carbonate, ethyl methyl carbonate (EMC), methylpropyl carbonate, and ethylpropyl carbonate, and more specifically, may include ethyl methyl carbonate (EMC).

The organic solvent may be a mixture of a cyclic carbonate-based organic solvent and a linear carbonate-based organic solvent. In this case, the cyclic carbonate-based organic solvent and the linear carbonate-based organic solvent may be mixed in a volume ratio of 10:90 to 40:60, specifically, in a volume ratio of 10:90 to 30:70, and more specifically in a volume ratio of 15:85 to 30:70. When the mixing ratio of the cyclic carbonate-based organic solvent and the linear carbonate-based organic solvent satisfies the above range, both high permittivity and low viscosity characteristics may be satisfied, and excellent ion conductivity characteristics may be achieved.

Furthermore, the organic solvent may further include at least one ester-based organic solvent selected from the group consisting of a linear ester-based organic solvent and a cyclic ester-based organic solvent in addition to at least one carbonate-based organic solvent selected from the group consisting of the cyclic carbonate-based organic solvent and the linear carbonate-based organic solvent, in order to prepare an electrolyte having high ionic conductivity.

The linear ester-based organic solvent may include at least one selected from the group consisting of methyl acetate, ethyl acetate, propyl acetate, methyl propionate, ethyl propionate, propyl propionate, and butyl propionate.

Also, the cyclic ester-based organic solvent may include, specifically, at least one selected from the group consisting of γ-butyrolactone, γ-valerolactone, γ-caprolactone, σ-valerolactone, and ε-caprolactone.

Meanwhile, if necessary, any organic solvent commonly used in a non-aqueous electrolyte may be additionally used without limitation as the organic solvent. For example, at least one organic solvent among an ether-based organic solvent, a glyme-based organic solvent, and a nitrile-based organic solvent may be further included.

As the ether-based solvent, any one selected from the group consisting of dimethyl ether, diethyl ether, dipropyl ether, methyl ethyl ether, methyl propyl ether, ethyl propyl ether, 1,3-dioxolane (DOL), and 2,2-bis(trifluoromethyl)-1,3-dioxolane (TFDOL) or a mixture of two or more thereof may be used, but the ether-based solvent is not limited thereto.

The glyme-based solvent is a solvent having higher permittivity and lower surface tension than the linear carbonate-based organic solvent and having lower reactivity with metal, and may include at least one selected from the group consisting of dimethoxyethane (glyme, DME), diethoxyethane, diglyme, triglyme, and tetraglyme (TEGDME), but the glyme-based solvent is not limited thereto.

The nitrile-based organic solvent may include at least one selected from the group consisting of acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile, but the nitrile organic solvent is not limited thereto.

### (3) Additive

The non-aqueous electrolyte according to the present invention includes an additive. The additive include a first additive and a second additive. The first additive includes a compound represented by Formula 1. The second additive includes lithium difluorophosphate (LiDFP).

In the present invention, the second additive includes lithium difluorophosphate, and the lithium difluorophosphate may react with an organic solvent (e.g., ethylene carbonate) to form an SEI film including an organic component on the negative electrode, but there is a limitation in that when only lithium difluorophosphate is used as an additive, the inorganic component (e.g., LiF, etc.) is insufficient in the SEI film such that the lithium difluorophosphate is first decomposed at the positive electrode, and the SEI film formation of the negative electrode is insufficient. Meanwhile, the compound represented by Formula 1 above included in the first additive is a sulfonamide-based compound substituted with an alkoxy group or aryloxy group substituted with at least one fluorine, and the alkoxy group or aryloxy group substituted with at least one fluorine is an electron withdrawing group that is relatively weak compared to F-, CF₃-, and the like, and thus the compound may be easily reduced at the negative electrode to easily form a film containing an inorganic component (e.g., LiF). Accordingly, since the non-aqueous electrolyte of the present invention in which the first additive and the second additive are used together may form an SEI film containing all of the organic/inorganic components on a negative electrode, the non-aqueous electrolyte may have excellent effects of preventing a side reaction of an electrolyte and suppressing gas generation, and may improve the storage characteristics and the resistance characteristics of the lithium secondary battery at high temperatures to an excellent level.

In addition, the non-aqueous electrolyte of the present invention in which the first additive and the second additive are used together may form an SEI film in the form in which inorganic components such as LiF are distributed in an SEI film containing organic components having a flexible property, and thus may form the SEI film having improved flexibility and durability at the same time on an electrode, thereby improving overall performance such as high-temperature performance of the lithium secondary battery to an excellent level. If only the first additive is included in the non-aqueous electrolyte as the additive or only the second additive is included in the non-aqueous electrolyte, the durability or flexibility is deteriorated, and thus the effect of improving the desired high-temperature performance of the lithium secondary battery of the present invention cannot be achieved.

The first additive includes a compound represented by Formula 1 below:

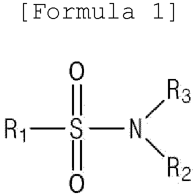

In Formula 1 above, R₁ is an alkoxy group having 1 to 10 carbon atoms substituted with at least one fluorine or an aryloxy group having 6 to 20 carbon atoms substituted with at least one fluorine, and R₂ and R₃ are each independently hydrogen, an alkyl group having 1 to 10 carbon atoms, or an aryl group having 6 to 20 carbon atoms.

R₁ may be an alkoxy group having 1 to 10 carbon atoms substituted with at least one fluorine or an aryloxy group having 6 to 20 carbon atoms substituted with at least one fluorine, specifically, an alkoxy group having 1 to 10 carbon atoms substituted with at least one fluorine, more specifically, an alkoxy group having 1 to 5 carbon atoms substituted with at least one fluorine, even more specifically CF₃O-, CF₃CF₂O-, or CF₃CH₂O-, and still even more specifically, CF₃CH₂O- in terms of easy formation of a negative electrode SEI film.

R₂ and R₃ may each independently be hydrogen, an alkyl group having 1 to 10 carbon atoms, or an aryl group having 6 to 20 carbon atoms, specifically, hydrogen, an alkyl group having 1 to 5 carbon atoms, more specifically, an alkyl group having 1 to 5 carbon atoms in terms of facilitating a stable reaction at the time of forming the SEI film, and even more specifically, a methyl group.

Specifically, the compound represented by Formula 1 above may include at least one selected from the group consisting of a compound represented by Formula 2 below, a compound represented by Formula 3 below, and a compound represented by Formula 4 below, and specifically, the compound represented by Formula 2 below in terms of being able to easily form the SEI film containing inorganic components such as LiF on the negative electrode.

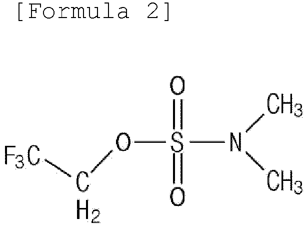

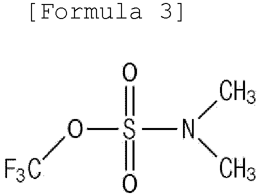

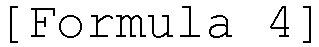

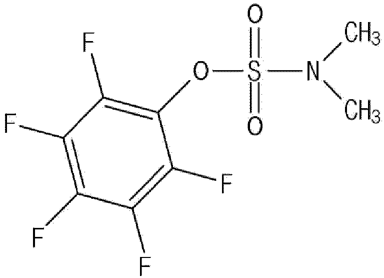

The first additive may be included in the non-aqueous electrolyte in an amount of 0.01 wt% to 10 wt%, specifically, 0.1 wt% to 2 wt%, more specifically, 0.2 wt% to 1 wt%, more specifically, 0.5 wt% to 1 wt%, and still more specifically, 0.7 wt% to 1 wt%. If the content of the compound represented by Formula 1 above satisfies the above range, it is preferable in terms of sufficiently imparting the durability to the SEI film and preventing an increase in resistance of the lithium secondary battery due to an excessive addition and the resulting deterioration in life performance.

Meanwhile, the second additive includes lithium difluorophosphate. The lithium difluorophosphate may form an SEI film containing organic components on the negative electrode by the reaction with an organic solvent (e.g., ethylene carbonate or the like).

The second additive may be included in the non-aqueous electrolyte in an amount of 0.01 wt% to 10 wt%, specifically 0.1 wt% to 2 wt%, more specifically, 0.2 wt% to 1 wt%, and even more specifically, 0.8 wt% to 1 wt%. If the content of the second additive satisfies the above range, it is preferable in terms of sufficiently imparting the flexibility to the SEI film, being favorable for improving resistance characteristics, and preventing an increase in resistance of the lithium secondary battery due to an excessive addition and the resulting deterioration in life performance.

The weight ratio of the first additive to the second additive may be 10:90 to 90:10, specifically, 20:80 to 80:20, more specifically, 32:68 to 70:30, even more specifically, 35:65 to 60:40, and still even more specifically, 53:47 to 60:40, and the flexibility and durability of the SEI film may be simultaneously improved to a preferable level at the above-described weight ratio.

The additive may further include an additional additive together with the first additive and the second additive. The additional additive may be included in the non-aqueous electrolyte in order to prevent the decomposition of the non-aqueous electrolyte in a high-output environment from causing negative electrode collapse, or to achieve low-temperature high-rate discharge characteristics, high-temperature stability, overcharge prevention, and battery expansion suppression effects at high temperatures.

Specifically, the additional additive may be at least one selected from the group consisting of vinylene carbonate, vinyl ethylene carbonate, fluoroethylene carbonate, propane sultone, propene sultone, succinonitrile, adiponitrile, ethylene sulfate, lithium difluorooxalatoborate (LiODFB), lithium bis-(oxalato)borate (LiBOB), 3-trimethoxysilanyl-propyl-N-aniline (TMSPa), and tris(triethylsilyl) phosphite (TMSPi), and specifically, vinylene carbonate.

The additional additive may be included in the non-aqueous electrolyte in an amount of 0.1 wt% to 15 wt%.

### Lithium Secondary Battery

In addition, the present invention provides a lithium secondary battery including the above-described non-aqueous electrolyte.

Specifically, the lithium secondary battery may include: a positive electrode; a negative electrode facing the positive electrode; a separator interposed between the negative electrode and the positive electrode; and the above-described non-aqueous electrolyte.

In this case, the lithium secondary battery of the present invention may be prepared according to a typical method known in the art. For example, after an electrode assembly is formed by sequentially stacking a positive electrode, a negative electrode, and a separator disposed between the positive electrode and the negative electrode, the lithium secondary battery of the present invention may be prepared by inserting the electrode assembly into a battery case, and injecting the non-aqueous electrolyte according to the present invention.

### (1) Positive Electrode

The positive electrode may include: a positive electrode current collector; and a positive electrode active material layer disposed on at least one surface of the positive electrode current collector.

The positive electrode current collector is not particularly limited so long as it has high conductivity without causing adverse chemical changes in the battery. Specifically, the positive electrode current collector may include at least one selected from the group consisting of copper, stainless steel, aluminum, nickel, titanium, sintered carbon, and an aluminum-cadmium alloy, and preferably aluminum.

The positive electrode current collector may typically have a thickness of 3 µm to 500 µm.

The positive electrode current collector may have microscopic irregularities formed on the surface thereof to enhance the adhesion of a positive electrode active material. For example, the positive electrode current collector may be used in various shapes such as a film, a sheet, a foil, a net, a porous body, a foam body, and a non-woven fabric body.

The positive electrode active material layer is disposed on at least one surface of the positive electrode current collector. Specifically, the positive electrode active material layer may be disposed on one surface or both surfaces of the positive electrode current collector.

The positive electrode active material layer may include the positive electrode active material.

The positive electrode active material is a compound capable of reversibly intercalating and deintercalating lithium, specifically, may include a lithium transition metal composite oxide including lithium and at least one transition metal consisting of nickel, cobalt, manganese, and aluminum, and preferably may include a lithium transition metal composite oxide including lithium and transition metals including nickel, cobalt, and manganese.

For example, the lithium transition metal composite oxide may include lithium-manganese-based oxide (*e.g*., LiMnO₂, LiMn₂O₄, *etc.*)*,* lithium-cobalt-based oxide (*e.g.,* LiCoO₂, *etc.),* lithium-nickel-based oxide (*e.g.,* LiNiO₂, *etc.*)*,* lithium-nickel-manganese-based oxide (*e.g.,* LiNi_{1-Y}Mn_{Y}O₂ (where 0<Y<1), LiMn_{2-z}Ni_{z}O₄ (where 0<Z<2), *etc*.), lithium-nickel-cobalt-based oxide (*e.g.,* LiNi_{1-Y1}Co_{Y1}O₂ (where 0<Y1<1), *etc*.), lithium-manganese-cobalt-based oxide (*e.g.,* LiCo_{1-Y2}Mn_{Y2}O₂ (where 0<Y2<1), LiMn_{2-z1}Co_{z1}O₄(where 0<Z1<2), etc.), lithium-nickel-manganese-cobalt-based oxide (*e.g.,* Li (NiₚCo_{q}Mnᵣ₁)O₂ (where 0<p<1, 0<q<1, 0<r1<1, and p+q+r1=1) or Li (Niₚ₁Co_{q1}Mnᵣ₂)O₄ (where 0<p1<2, 0<q1<2, 0<r2<2, and p1+q1+r2=2), etc.), or lithium-nickel-cobalt-transition metal (M) oxide (*e.g.,* Li (Niₚ₂Co_{q2}Mnᵣ₃Mₛ₂)O₂ (where M is selected from the group consisting of aluminum (Al), iron (Fe), vanadium (V), chromium (Cr), titanium (Ti), tantalum (Ta), magnesium (Mg), and molybdenum (Mo), and p2, q2, r3, and s2 are each independent atomic fraction of elements, wherein 0<p2<1, 0<q2<1, 0<r3<1, 0<S2<1, and p2+q2+r3+S2=1), etc.), and any one thereof or a compound of two or more thereof may be included. Among these materials, in terms of the improvement of capacity characteristics and stability of the battery, the lithium transition metal composite oxide may include LiCoO₂, LiMnO₂, LiNiO₂, lithium nickel manganese cobalt oxide (e.g., Li (Ni_{0.6}Mn_{0.2}Co_{0.2})O₂, Li (Ni_{0.5}Mn_{0.3}Co_{0.2})O₂, Li (Ni_{0.7}Mn_{0.15}Co_{0.15})O₂, or Li (Ni_{0.8}Mn_{0.1}Co_{0.1})O₂), or lithium nickel cobalt aluminum oxide (e.g., Li (Ni_{0.8}Co_{0.15}Al_{0.05})O₂, etc.), and, in consideration of a significant improvement effect due to the control of types and content ratios of components constituting the lithium transition metal composite oxide, the lithium transition metal composite oxide may be Li (Ni_{0.6}Mn_{0.2}Co_{0.2})O₂, Li (Ni_{0.5}Mn_{0.3}Co_{0.2})O₂, Li (Ni_{0.7}Mn_{0.15}Co_{0.15})O₂, Li (Ni_{0.8}Mn_{0.1}Co_{0.1})O₂, or the like, and any one thereof or a mixture of two or more thereof may be used.

More specifically, the positive electrode active material may be a lithium transition metal composite oxide, and may include nickel in an amount of 60 mol% or more based on the total number of moles of the transition metal included in the lithium transition metal composite oxide. Specifically, the positive electrode active material may be a lithium transition metal composite oxide, and the transition metal may include: nickel; and at least one selected from manganese, cobalt, and aluminum, and the nickel may be included in an amount of 60 mol% or more, specifically, 60 mol% to 90 mol% based on the total number of moles of the transition metal. When the above-described non-aqueous electrolyte is used together with the lithium transition metal composite oxide using a high content of nickel, it is preferable in terms of reducing by-products on a gas generated due to structural collapse.

In addition, the positive electrode active material may include a lithium composite transition metal oxide represented by Formula 5 below:

[Formula 5] Li₁₊ₓ(NiₐCo_{b}Mn_{c}M_{d})O₂

In Formula 5 above, M is at least one selected from W, Cu, Fe, V, Cr, Ti, Zr, Zn, Al, In, Ta, Y, La, Sr, Ga, Sc, Gd, Sm, Ca, Ce, Nb, Mg, B, and Mo, and 1+x, a, b, c, and d are each independent atomic fraction of elements, wherein 0≤x≤0.2, 0.50≤a<1, 0<b≤0.25, 0<c≤0.25, 0≤d≤0.1, and a+b+c+d=1.

Preferably, a, b, c, and d above may be 0.70≤a≤0.95, 0.025≤b≤0.20, 0.025≤c≤0.20, and 0≤d≤0.05, respectively.

In addition, a, b, c, and d above may be 0.80≤a≤0.95, 0.025≤b≤0.15, 0.025≤c≤0.15, and 0≤d≤0.05, respectively.

In addition, a, b, c, and d above may be 0.85≤a≤0.90, 0.05≤b≤0.10, 0.05≤c≤0.10, and 0≤d≤0.03, respectively.

The positive electrode active material may be included in an amount of 80 wt% to 99 wt%, and preferably, 92 wt% to 98.5 wt% in the positive electrode active material layer in consideration of exhibiting sufficient capacity of the positive electrode active material.

The positive electrode active material layer may further include a conductive agent and/or a binder together with the positive electrode active material as described above.

The binder is a component that assists in the binding between the active material and the conductive agent and in the binding with the current collector, and specifically may include at least one selected from the group consisting of polyvinylidene fluoride, polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene terpolymer (EPDM), a sulfonated EPDM, a styrene-butadiene rubber, and a fluoro rubber, and preferably include polyvinylidenefluoride.

The binder may be included in an amount of 1 wt% to 20 wt%, and preferably, 1.2 wt% to 10 wt% in the positive electrode active material layer in terms of securing sufficient binding force between components such as positive electrode active materials.

The conductive agent is not particularly limited so long as it can be used to assist and improve conductivity in the secondary battery and has conductivity without causing adverse chemical changes. Specifically, the positive electrode conductive agent may include at least one selected from the group consisting of graphite such as natural graphite or artificial graphite; carbon black such as carbon black, acetylene black, Ketjen black, channel black, furnace black, lamp black or thermal black; a conductive fiber such as a carbon fiber or a metal fiber; a conductive tube such as a carbon nanotube; fluorocarbon; metal powder such as aluminum or nickel powder; a conductive whisker such as a zinc oxide whisker or a potassium titanate whisker; a conductive metal oxide such as a titanium oxide; and a polyphenylene derivative, and preferably include carbon black in terms of the improvement in conductivity.

The conductive agent may be included in an amount of 1 wt% to 20 wt%, and preferably, 1.2 wt% to 10 wt% in the positive electrode active material layer in terms of securing sufficient electrical conductivity.

The positive electrode active material layer may have a thickness of 30 µm to 400 µm, and preferably, 40 µm to 110 µm.

The positive electrode may be prepared by coating a positive electrode current collector with a positive electrode slurry including a positive electrode active material, and optionally a binder, a conductive agent, and a solvent for forming a positive electrode slurry and then drying and rolling the coated positive electrode current collector.

The solvent for forming a positive electrode slurry may include an organic solvent such as N-methyl-2-pyrrolidone (NMP). A solid content in the positive electrode slurry may be in a range of 40 wt% to 90 wt%, and particularly, 50 wt% to 80 wt%.

### (2) Negative Electrode

The negative electrode faces the positive electrode.

The negative electrode may include a negative electrode current collector and a negative electrode active material layer disposed on at least one surface of the negative electrode current collector.

The negative electrode current collector is not particularly limited so long as it has high conductivity without causing adverse chemical changes in the battery. Specifically, copper, stainless steel, aluminum, nickel, titanium, fired carbon, copper or stainless steel that is surface-treated with one of carbon, nickel, titanium, silver, or the like, an aluminum-cadmium alloy, or the like may be used as the negative electrode current collector.

The negative electrode current collector may typically have a thickness of 3 µm to 500 µm.

The negative electrode current collector may have microscopic irregularities formed on the surface thereof to enhance the adhesion of the negative electrode active material. For example, the negative electrode current collector may be used in various shapes such as a film, a sheet, a foil, a net, a porous body, a foam body, and a non-woven fabric body.

The negative electrode active material layer is disposed on at least one surface of the negative electrode current collector. Specifically, the negative electrode active material layer may be disposed on one surface or both surfaces of the negative electrode current collector.

The negative electrode active material layer may include the negative electrode active material.

The negative electrode active material is a material capable of reversibly intercalating/deintercalating lithium ions, may include at least one selected from the group consisting of a carbon-based active material, a (metalloid-) metal-based active material, and a lithium metal, and specifically, may include at least one selected from the group consisting of a carbon-based active material and a (metalloid-) metal-based active material. Alternatively, the negative electrode active material may include a carbon-based active material and a (metalloid-) metal-based active material.

The carbon-based active material may include at least one selected from the group consisting of artificial graphite, hard carbon, soft carbon, carbon black, graphene, and fibrous carbon, and may preferably include graphite.

The carbon-based active material may have an average particle diameter (D₅₀) of 10 µm to 30 µm, preferably, 15 µm to 25 µm in terms of reducing side reactions with the electrolyte while maintaining structural stability during charging and discharging.

Specifically, the (metalloid-) metal-based active material may include: at least one (metalloid) metal selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn; an alloy of lithium and at least one (metalloid) metal selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn; an oxide of at least one (metalloid) metal selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn; a lithium titanium oxide (LTO); a lithium vanadium oxide, or the like.

More specifically, the (metalloid-) metal-based active material may include a silicon-based active material.

The silicon-based active material may include a compound represented by SiOₓ (0≤x<2). Since SiO₂ does not react with lithium ions and thus cannot store lithium, x is preferably within the above range, and more preferably, the silicon-based active material may be SiO.

The silicon-based active material may have an average particle diameter (D₅₀) of 1 µm to 30 µm, preferably 2 µm to 15 µm in terms of reducing side reactions with the electrolyte while maintaining structural stability during charging and discharging.

The negative electrode active material may be included in an amount of 60 wt% to 99 wt%, and preferably, 75 wt% to 98 wt% in the negative electrode active material layer.

The negative electrode active material layer may further include a conductive agent and/or a binder together with the negative electrode active material.

The binder is used to improve the adhesion between the negative electrode active material layer and the negative electrode current collector and improve the battery performance, and may include, for example, at least one selected from the group consisting of polyvinylidene fluoride-hexafluoropropylene copolymer (PVDF-co-HFP), polyvinylidene fluoride (PVDF), polyacrylonitrile, polymethylmethacrylate, polyvinyl alcohol, carboxymethylcellulose (CMC), starch, hydroxypropyl cellulose, regenerated cellulose, polyvinylpyrrolidone, polytetrafluoroethylene, polyethylene, polypropylene, polyacrylic acid, ethylene-propylene-diene monomer (EPDM), sulfonated EPDM, styrene butadiene rubber (SBR), fluorine rubber, and a material in which hydrogen thereof is substituted with Li, Na, Ca, or the like, and may also include various copolymers thereof.

The binder may be included in the negative electrode active material layer in an amount of 0.5 wt% to 10 wt%.

The conductive agent is not particularly limited as long as it has conductivity without causing adverse chemical changes in the battery, and, conductive materials, for example, graphite such as natural graphite or artificial graphite; carbon black such as acetylene black, Ketjen black, channel black, furnace black, lamp black, or thermal black; conductive fibers such as carbon fibers or metal fibers; conductive tubes such as carbon nanotubes; fluorocarbon; metal powder such as aluminum powder, or nickel powder; conductive whiskers such as zinc oxide whiskers or potassium titanate whiskers; conductive metal oxide such as titanium oxide; or polyphenylene derivatives, may be used.

The conductive agent may be included in an amount of 0.5 wt% to 10 wt%, and preferably, 1 wt% to 5 wt% in the negative electrode active material layer.

The negative electrode active material layer may have a thickness of 10 µm to 100 µm, and preferably, 50 µm to 80 µm.

The negative electrode may be prepared by coating at least one surface of the negative electrode current collector with a negative electrode slurry including a negative electrode active material, a binder, a conductive agent, and a solvent for forming a negative electrode slurry and then drying and rolling the coated negative electrode current collector.

The solvent for forming a negative electrode slurry may include, for example, at least one selected from the group consisting of distilled water, N-methyl-2-pyrrolidone (NMP), ethanol, methanol, and isopropyl alcohol, and preferably include distilled water in terms of facilitating the dispersion of the negative electrode active material, the binder and/or the conductive agent. A solid content in the negative electrode slurry may be in a range of 30 wt% to 80 wt%, and particularly, 40 wt% to 70 wt%.

### (3) Separator

Also, a typical porous polymer film used as a typical separator, for example, a porous polymer film prepared from a polyolefin-based polymer, such as an ethylene homopolymer, a propylene homopolymer, an ethylene-butene copolymer, an ethylene-hexene copolymer, and an ethylene-methacrylate copolymer, may be used alone or in a lamination therewith as the separator. Also, a typical porous nonwoven fabric, for example, a nonwoven fabric formed of high melting point glass fibers or polyethylene terephthalate fibers may be used, but the present invention is not limited thereto. Furthermore, a coated separator including a ceramic component or a polymer material may be used to secure heat resistance or mechanical strength, and the separator having a single layer or multilayer structure may be optionally used.

A shape of the lithium secondary battery of the present invention is not particularly limited, but a cylindrical type using a can, a prismatic type, a pouch type, or a coin type may be used.

Hereinafter, the present invention will be described in more detail with reference to specific examples. However, the following examples are merely presented to exemplify the present invention, and the scope of the present invention is not limited thereto. It will be apparent to those skilled in the art that various modifications and alterations are possible within the scope and technical spirit of the present invention. Such modifications and alterations fall within the scope of claims included herein.

### Examples and Comparative Examples

### Example 1

### (Preparation of Non-aqueous Electrolyte)

As an organic solvent, a mixture of ethylene carbonate (EC) and ethylmethyl carbonate (EMC) in a volume ratio of 30:70 was used.

LiPF₆ as a lithium salt, a compound represented by Formula 2 below as a first additive, lithium difluorophosphate as a second additive, and vinylene carbonate (VC) as an additional additive were added to the organic solvent to prepare a non-aqueous electrolyte.

The LiPF₆ was included in the non-aqueous electrolyte at a concentration of 1.2 M.

The compound represented by Formula 2 above was included in an amount of 0.5 wt% in the non-aqueous electrolyte, the lithium difluorophosphate was included in an amount of 0.8 wt% in the non-aqueous electrolyte, and the vinylene carbonate was included in an amount of 0.5 wt% in the non-aqueous electrolyte.

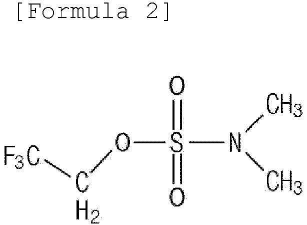

### (Manufacture of Lithium Secondary Battery)

A positive electrode active material (LiNi_{0.90}Co_{0.06}Mn_{0.03}Al_{0.01}O₂), a conductive agent (carbon black), and a binder (polyvinylidene fluoride) were added in a weight ratio of 97.6:0.8:1.6 to N-methyl-2-pyrrolidone (NMP), which was a solvent, to prepare a positive electrode material mixture slurry (solid content: 60 wt%). The positive electrode material mixture slurry was applied on one surface of a positive electrode current collector (Al thin film) having a thickness of 13.5 µm, dried, and roll-pressed to prepare a positive electrode.

A negative electrode active material (a mixture of graphite and SiO in a weight ratio of 90:10), a conductive agent (carbon black), and a binder (styrene-butadiene rubber/carboxymethylcellulose) were added to distilled water, which was a solvent, in a weight ratio of 97.6:1.6:0.8 to prepare a negative electrode material mixture slurry (solid content: 60 wt%). The negative electrode material mixture slurry was applied on one surface of a negative electrode current collector (Cu thin film) having a thickness of 6 µm, dried, and roll-pressed to prepare a negative electrode.

In a dry room, a polyethylene porous film separator was interposed between the positive electrode and the negative electrode as prepared above, and then the prepared non-aqueous electrolyte was injected thereto to manufacture a lithium secondary battery.

### Example 2

A non-aqueous electrolyte and a secondary lithium battery were prepared in the same manner as in Example 1, except that 0.1 wt% of the compound represented by Formula 2 above was added as the first additive instead of 0.5 wt% to the non-aqueous electrolyte.

### Example 3

A non-aqueous electrolyte and a secondary lithium battery were prepared in the same manner as in Example 1, except that 1 wt% of the compound represented by Formula 2 above was added as the first additive instead of 0.5 wt% to the non-aqueous electrolyte.

### Example 4

A non-aqueous electrolyte and a secondary lithium battery were prepared in the same manner as in Example 1, except that 0.5 wt% of lithium difluorophosphate was added as the second additive instead of 0.8 wt% to the non-aqueous electrolyte.

### Example 5

A non-aqueous electrolyte and a secondary lithium battery were prepared in the same manner as in Example 1, except that 1 wt% of lithium difluorophosphate was added as the second additive instead of 0.8 wt% to the non-aqueous electrolyte.

### Comparative Example 1

A non-aqueous electrolyte and a lithium secondary battery were prepared in the same manner as in Example 1, except that the first additive was not added.

### Comparative Example 2

A non-aqueous electrolyte and a lithium secondary battery were prepared in the same manner as in Example 1, except that the first additive and the second additive were not added.

### Comparative Example 3

A non-aqueous electrolyte and a lithium secondary battery were prepared in the same manner as in Example 1, except that the second additive was not added and 0.5 wt% of the compound represented by Formula 6 below instead of the compound represented by Formula 2 above was added as the first additive to the non-aqueous electrolyte.

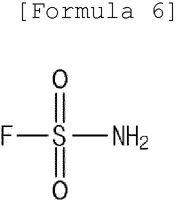

### Comparative Example 4

A non-aqueous electrolyte and a lithium secondary battery were prepared in the same manner as in Example 1, except that the second additive was not added.

### Experimental Examples

### Experimental Example 1: Evaluation of Capacity Retention after High-Temperature Storage

After performing the formation process on the lithium secondary batteries manufactured in Examples and Comparative Examples above, each of the lithium secondary batteries was charged to 4.2 V at a 0.33-C rate at 25 °C under the condition of constant current/constant voltage (CC/CV) (0.05 C cut off), and discharged to 2.80 V at a 0.33-C rate under the condition of constant current (CC) to measure an initial discharge capacity.

Thereafter, the lithium secondary battery was fully charged up to 100% of SOC under the charging conditions, and stored at a high temperature (60 °C) for 8 weeks. Thereafter, the battery was transferred to a charger/discharger at room temperature (25 °C), and then discharged under the discharging conditions to measure the discharge capacity, and the capacity retention was calculated by the following equation, and the results are shown in Table 1 below. Capacity retention (%) = (discharge capacity after high-temperature storage / initial discharge capacity) × 100

### Experimental Example 2: Evaluation of Resistance Increase Rate after High-temperature Storage

After performing the formation process on the lithium secondary batteries manufactured in Examples and Comparative Examples above, each of the lithium secondary batteries was charged to 4.2 V at a 0.33-C rate at 25 °C under the condition of constant current/constant voltage (CC/CV) (0.05 C cut off), and discharged to 2.80 V at a 0.33-C rate under the condition of constant current (CC) to measure an initial resistance.

Thereafter, the lithium secondary battery was fully charged up to 100% of SOC under the charging conditions, and stored at a high temperature (60 °C) for 8 weeks. Thereafter, the battery was transferred to a charger/discharger at room temperature (25 °C), then the resistance was measured, and the resistance increase rate was calculated by the following equation, and the results are shown in Table 1 below.Resistance increase rate (%) = {(resistance after high-temperature storage - initial resistance) / (initial resistance)} × 100

**[Table 1]**

| | Experimental Example 1 | Experimental Example 2 |
|---|---|---|
| | Capacity retention during high-temperature storage (%, 8 weeks) | Resistance increase rate during high-temperature storage (%, 8 weeks) |
| Example 1 | 91.14 | -8.86 |
| Example 2 | 90.58 | -3.42 |
| Example 3 | 91.33 | -10.17 |
| Example 4 | 90.31 | -5.51 |
| Example 5 | 91.24 | -8.72 |
| Comparative Example 1 | 90.39 | -1.32 |
| Comparative Example 2 | 89.45 | +8.42 |
| Comparative Example 3 | 87.85 | +22.50 |
| Comparative Example 4 | 89.45 | +8.10 |

Referring to Table 1, it may be confirmed that the lithium secondary batteries of Examples 1 to 5 using the non-aqueous electrolyte including the first additive and the second additive according to the present invention have excellent high-temperature storage life performance and low resistance increase rate compared to the lithium secondary batteries of Comparative Examples 1 to 4.

## Claims

1. A non-aqueous electrolyte comprising:
a lithium salt;
an organic solvent; and
an additive,
wherein the additive comprise a first additive and a second additive, the first additive comprises a compound represented by Formula 1 below, and the second additive comprises lithium difluorophosphate: 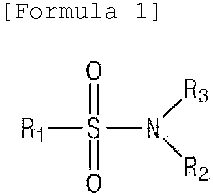
wherein, in Formula 1 above, R₁ is an alkoxy group having 1 to 10 carbon atoms substituted with at least one fluorine or an aryloxy group having 6 to 20 carbon atoms substituted with at least one fluorine, and R₂ and R₃ are each independently hydrogen, an alkyl group having 1 to 10 carbon atoms, or an aryl group having 6 to 20 carbon atoms.

2. The non-aqueous electrolyte of claim 1, wherein the compound represented by Formula 1 comprises at least one selected from the group consisting of a compound represented by Formula 2 below, a compound represented by Formula 3 below, and a compound represented by Formula 4 below:

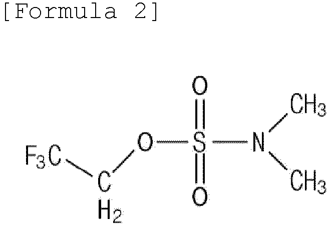

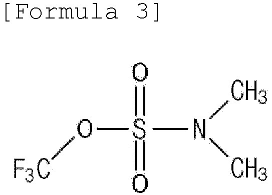

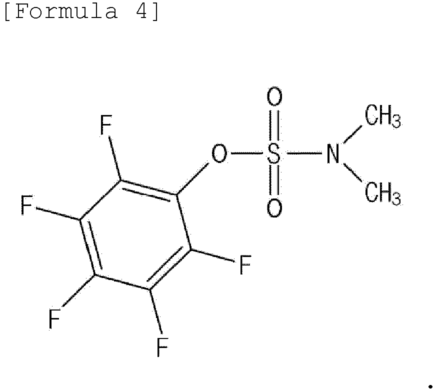

3. The non-aqueous electrolyte of claim 1, wherein the first additive is included in an amount of 0.1 wt% to 10 wt% in the non-aqueous electrolyte.

4. The non-aqueous electrolyte of claim 1, wherein the second additive is included in an amount of 0.1 wt% to 10 wt% in the non-aqueous electrolyte.

5. The non-aqueous electrolyte of claim 1, wherein a weight ratio of the first additive to the second additive is 10:90 to 90:10.

6. The non-aqueous electrolyte of claim 1, wherein the lithium salt comprises at least one selected from the group consisting of LiCl, LiBr, LiI, LiBF₄, LiClO₄, LiAlO₄, LiAlCl₄, LiPF₆, LiSbF₆, LiAsF₆, LiB₁₀Cl₁₀, LiB(C₂O₄)₂ (LiBOB), LiCF₃SO₃, LiN (SO₂F)₂ (LiFSI), LiCH₃SO₃, LiCF₃CO₂, LiCH₃CO₂, and LiN (SO₂CF₂CF₃)₂ (LiBETI).

7. The non-aqueous electrolyte of claim 1, wherein the lithium salt is included in a molar concentration of 0.5 M to 5.0 M in the non-aqueous electrolyte.

8. The non-aqueous electrolyte of claim 1, wherein the organic solvent comprises at least one selected from the group consisting of a cyclic carbonate-based organic solvent, a linear carbonate-based organic solvent, a linear ester-based organic solvent, and a cyclic ester-based organic solvent.

9. The non-aqueous electrolyte of claim 1, wherein the additive further comprises at least one additional additive selected from the group consisting of vinylene carbonate, vinyl ethylene carbonate, fluoroethylene carbonate, propane sultone, propene sultone, succinonitrile, adiponitrile, ethylene sulfate, lithium bis-(oxalato)borate (LiBOB), lithium difluorooxalatoborate (LiODFB), 3-trimethoxysilanyl-propyl-N-aniline (TMSPa), and tris(triethylsilyl)phosphite (TMSPi).

10. A lithium secondary battery comprising:
a positive electrode;
a negative electrode facing the positive electrode;
a separator interposed between the positive electrode and the above negative electrode; and
the non-aqueous electrolyte according to claim 1.
